# EUROPÄISCHE PATENTANMELDUNG

(11) **EP 2 230 117 A2**
(43) Veröffentlichungstag der Anmeldung: **22.09.2010**
(21) Anmeldenummer: 10002980.0
(22) Anmeldetag: 21.03.2010
(51) Int. Cl.: B60J 7/14, B60J 7/10, B62D 65/06

(54) **Dachheck**

(30) Priorität: 20.03.2009 DE 202009003946 U
(71) Anmelder: Von Czarnecki, Stefan, 80639 München (DE); Vogt, Oliver, 80803 München (DE)
(72) Erfinder: Von Czarnecki, Stefan, 80639 München (DE); Vogt, Oliver, 80803 München (DE)

(57) **Zusammenfassung**

Die Erfindung betrifft Cabriolet, umfassend ein zueinander bewegliches und / oder ineinander versenkbares Dach-Heckklappenmodul, welches zur Erhöhung der Varianten mit Hilfe eines einzigen Kinematikmoduls relativ zur Cabrioletkarosserie Bewegungen auszuführen in der Lage ist, bei welchem das Dach-Heckklappenmodul durch ein relativ zur Karosserie nicht bewegliches Modul formschlüssig ersetzbar ist.

## Beschreibung

Die Erfindung betrifft ein Fahrzeug mit einer Cabriolet-Rohkarosserie und einem mit diesem verbindbaren Dachmodul.

Aus der DE 197/11 352 C 1 ist ein Personenkraftwagen bekannt, bei dem ein Cabrioletdach gegen ein Hardtop-Dach austauschbar ist. Des Weiteren ist aus der DE 19502019 Cl ein Dachmodul mit einem öffnungsfähigen Dachteil bekannt, das bei einem Fahrzeugzulieferer hergestellt und geprüft und anschließend im zerlegten Zustand zu einem Fahrzeughersteller geliefert wird. Zusätzlich ist aus der DE 299 21 458 U1 ein Fahrzeug mit einer Rohkarosserie und einem damit verbindbaren Dachmodul bekannt. Weiterhin ist aus der DE 100 28 405 B4 eine Kofferraumdeckelanordnung für ein Fahrzeug mit einem einklappbaren Verdeck bekannt.

Diese weisen den Nachteil einer aufwendigen und damit teuren und anfälligen Mechanik auf.

Die Modellpalette der Automobilhersteller muss sich zunehmend über eine steigende Anzahl an unterschiedlichen Fahrzeugen diversifizieren, um den Massen- und den Nischenbedarf abzudecken. Die Derivatentwicklung muss auf den Lebenszyklus der Plattform ausgerichtet sein, und muss schnelle und kosteneffiziente Lösungen sicherstellen. Viele der auf dem Markt vorgestellten Derivatstudien basieren auf einem umfassenden Entwicklungsansatz, mit Eingriffen in die bestehenden Karosseriestrukturen, um eine neue Karosserieform zu realisieren. Aufgrund der hohen Kostensituation aus diesem Ansatz im Sinne der Entwicklungskosten sowie der Änderungen und Varianten in den Produktions- und Aftersales-Prozessen, werden viele dieser Konzepte und Studien als nicht umsetzbar bewertet.

Mit bestehenden Lösungen, wie z.B. Hardtop-Verdecke für Stoffdach-Cabrios werden keine neuen, eigenständigen Karosserieformen mit klaren Abgrenzungsmerkmalen geschaffen.

Es ist bekannt, Rohkarosserien bereits im Basisfahrzeug hinsichtlich der weiteren Derivatstrategie in der funktionalen Auslegung zu dimensionieren. Die maximale Funktionalität der Rohkarosserie hinsichtlich Steifigkeiten, Crashanforderungen und Performance ist für ein Fahrzeug mit verbindbarem Dachmodul (Verdeck) sicherzustellen.

Der Erfindung liegt die Aufgabe zugrunde, ein Fahrzeug zu schaffen, dass auch bei kleineren Stückzahlen kostengünstig realisierbar ist.

Diese Aufgabe wird durch die Merkmale des Patentanspruchs 1 gelöst. Vorteilhafte Ausgestaltung der Erfindung sind den Unteransprüchen zu entnehmen.

Diese Aufgabe wird insbesondere gelöst durch ein Fahrzeug, welches ein Cabriolet ist, und insbesondere ein solches, mit festen Klappen, umfassend ein zueinander bewegliches und/oder ineinander versenkbares Dach-Heckklappenmodul, welches mit Hilfe eines (vorzugsweise einzigen) Kinematikmoduls relativ zur Cabrioletkarosserie Bewegungen auszuführen in der Lage ist, bei welchem das Dach-Heckklappenmodul durch ein relativ zur Karosserie nicht bewegliches Modul, welches insbesondere ein einstückiges Modul umfassend Dach und/oder Heckelemente ist, und die Cabrioletkarosserie im wesentlichen formschlüssig berührt und das bestehende cabrioletdach ersetzt bzw. ersetzbar macht.
Unter "nicht beweglichem Dachmodule" werden Dachmodule verstanden, welche an ihrer Berührlinie mit der Karosserie außer, wenn sie für die Kinematik zum betreiben des Moduls notwendig sind, keine Relativbewegungen aufweisen

Ein Cabriolet, umfassend die Merkmale mit festen Klappen und/oder ineinander versenkbares Dach-Heckklappenmodul, bewirkt, dass eine oder mehrere Dachschalen aus einer starren Oberfläche bestehen, und über eine Kinematik eine Versenkung und Abdeckung des Verdeckes unter und mit dem Heckdeckel dargestellt werden kann.

Unter "Cabriolet" wird vorliegend insbesondere ein Cabriolet ohne B-Säule verstanden, insbesondere ohne fest mit der Fahrzeugkarosserie verbundene B-Säule. Ein Cabriolet, umfassend die Merkmale eines Moduls umfassend bzw. bestehend aus Dachklappen und Heckklappen, welches mit Hilfe einer Kinematik relativ zur Cabrioletkarosserie Bewegungen auszuführen in der Lage ist, bewirkt, dass eine oder mehrere Dachschalen und der Heckdeckel auf einer gemeinsamen oder getrennten Kinematik/en flexibel und beweglich am Rohbau befestigt sind. Unter Dach-Heckklappenmodul wird verstanden, daß dieses Modul mindestens einen den Bereich des Dachs und/oder der Heckklappe überspannen kann. Dieses Modul kann wiederum selbst Dach- und/oder Heckklappen umfassen / enthalten. So kann es beispielsweise den Laderaum durch einen eigene Klappe bzw. Öffnung zugänglich machen, während das Modul den Bereich des Laderaums zumindest teilweise oder ganz überdeckt. Das gleiche gilt für das Dach. So kann das Dach-Heckklappenmodul beispielsweise den Himmel durch einen eigene Klappe bzw. Öffnung eröffnen (z.B. Schiebedach), während das Modul den Bereich des Innenraums zumindest teilweise oder ganz überdeckt.

Unter dem "Modul umfassend bzw. bestehend aus Dachklappen und Heckklappen" werden insbesondere RHT-Klappen im Sinne der DE 19502019 und der DE 299 21 458 U1 verstanden. Unter "festen Klappen" werden Klappen, also Deckel und Dachelemente verstanden, welche aus Werkstoffen bestehen, welche im wesentlichen die Eigenschaften von Karosserieblechen aufweisen. Weiterhin wird durch die Kinematik das Öffnen und Schließen des Daches gewährleistet, und durch den in Fahrzeuglängsachse in beide Richtungen beweglichen Heckdeckel ist sowohl die komplette Versenkung des Dachs in der Karosserie, sowie die Zugänglichkeit zu dem Kofferraum vom Heck des Fahrzeuges her umsetzbar.

Diese Kinematik ist in einem einzigen Baugruppenmodul untergebracht und stellt in einem einzigen Modul alle zum Betrieb notwendigen Rotationen bereit. Fakultativ kann es auch Translationen bereitstellen.
Hierdurch unterscheidet es sich vom Stand der Technik dadurch, daß in diesem das Verdeck bzw. die Heckklappe ihre Kinematik in mindestens zwei voneinander unabhängigen Modulen haben. Aus diesem Grund stellen die Lösungen im Stand der Technik auch keine modulartige Austauschbarkeit für beide Elemente bereit, sondern müssen vielmehr einzeln ausgebaut werden, wobei meist ein Quersteg der Außenkarosserie bestehen bleibt, was erfindungsgemäß wegen der Austauschbarkeit des Gesamtmoduls nicht der Fall ist.

Ein Cabriolet, umfassend die Merkmale der formschlüssigen Ersetzung des Dach-Heckklappenmoduls durch ein relativ zur Karosserie nicht beweglichen Dachmoduls, bewirkt, dass die bewegliche Funktionalität des Dach-Heckklappenmoduls bezüglich Öffnen und Schließen des Verdecks durch ein festes Dachmodul ohne diese Funktionalität ersetzt wird.

Hierbei bedeutet nicht relativ zur Karosserie beweglich die feste und starre Verbindung des Dachmoduls zu der Karosserie. Das Dachmodul stellt keine Funktionalität zum Öffnen und Schließen im Sinne eines beweglichen Verdecks zur Verfügung. Die Befestigung des Dachmoduls erfolgt vorzugsweise über die bereits bestehenden Cabriolettypischen Anbindungen z.B. im Bereich Windlauf und im Heckbereich der Rohkarosse.

Hierbei bedeutet "formschlüssig" die komplette und restlose Schließung aller Öffnungen, die durch die Entnahme des Moduls umfassend bzw. bestehend aus Dachklappen und Heckklappen entstehen. Die bestehenden Schnittstellen und Befestigungsmöglichkeiten an der Karosserie des Cabriolets werden hierbei berücksichtigt und verwendet.

Das Merkmal "...durch ein relativ zur Karosserie nicht bewegliches Modul formschlüssig ersetzbar ist..." bedeutet, daß dieses Modul an seiner Berührungskante zur Karosserie keine zusätzlich gewollten Relativbewegungen aufweist. Es bedeutet nicht, daß dieses Modul nicht bewegliche Elemente aufweist, wie beispielsweise ein Schiebedach, versenkbare Fenster. Es bedeutet auch nicht, daß dieses Modul nicht selbst über einen Klappmechanismus verfügt, über welchen nach dem Einbau temporär Teile von ihm geklappt werden können. Auch ein solches Modul, welches im Grunde Ähnlichkeiten zum bereits entnommenen Modul aufweist, erfüllt das Merkmal "...durch ein relativ zur Karosserie nicht bewegliches Modul formschlüssig ersetzbar ist..." zumindest zeitweise. Beispielhaft sei ein derartiges zu ersetzendes RHT-Modul erwähnt, welches durch ein Modul ersetzt wird, welches das Fahrzeug durch seine Eigenheiten zu einem Landaulet zu verändern in der Lage ist. Alternative Module erfüllen das Merkmal "...durch ein relativ zur Karosserie nicht bewegliches Modul formschlüssig ersetzbar ist..." z.B. dauerhaft.

Ein Fahrzeug, umfassend die Merkmale, dass das Dachmodul ein Dach-Heckklappenmodul ist, bewirkt, dass das Dachmodul sich über die Heckklappe hinaus bis zu dessen Schließmechanismus erstreckt. Es umfasst damit auch die Integration einer Heckklappe zur Sicherstellung der Zugänglichkeit und Nutzung der Beladungsmöglichkeiten des Kofferraums vom Heck des Fahrzeugs her.

Ein Cabriolet, umfassend die Merkmale, dass das Dach-Heckklappenmodul des Cabriolets eine multifunktionale Heckklappe umfasst, bewirkt, einen in Fahrzeuglängsachse in beide Richtungen zu öffnenden Heckdeckel, und damit die Möglichkeit die Funktionalität Verdeckdeckel wie auch die Funktionalität Kofferraumklappe in einem Bauteil zu vereinen.

Ein Cabriolet, umfassend die Merkmale, dass die Heckklappe des derivaten Fahrzeugs eine Monofunktionalität aufweist, bewirkt, dass die Heckklappe lediglich die Zugänglichkeit zu dem Kofferraum sicherstellt.

Ein Cabriolet, umfassend die Merkmale, dass das Dach-Heckklappenmodul die im Cabriolet vorhandenen Anschluss-und/oder Befestigungsmöglichkeiten nutzt, bewirkt, dass die Verbindung des Dachmoduls zu der Karosserie über die Nutzung der Verdeckschlösser im Windlauf sowie der rohbauseitigen Verstärkungen und Befestigungsmöglichkeiten der Verdeckkinematik erfolgt.

Ein Cabriolet, umfassend die Merkmale, dass zum elektrischen Betrieb des Dachmoduls und/oder Dach-Heckklappenmoduls die Elektrik / Elektronik selektiv übernommen wird, bewirkt, das die Schnittstelle Kabelbaum fahrzeugseitig zu Kabelbaum verdeckseitig ebenfalls als Schnittstelle für den Kabelbaum Dachmodul übernommen wird, wobei jedoch nur die benötigten Leitungen im Kabelbaum Dachmodul weitergeführt werden.

Ein Cabriolet, umfassend die Merkmale, dass zur Sicherstellung der elektrischen/elektronischen Funktionalität des Gesamtfahrzeuges den weiterhin verbauten Cabrioletspezifischen Sensoren und Steuergeräten ein definierter Zustand vorgegeben wird, bewirkt, dass über geeignete Steuergeräte die Funktionalität, bzw. die Signale der Steuergeräte und der Sensorik des entfernten Moduls umfassend bzw. bestehend aus Dachklappen und Heckklappen im Rahmen des Gesamtfahrzeugbordnetzes simuliert und/oder sichergestellt werden.

Ein Cabriolet umfassend die Merkmale, daß die formschlüssige Passung zwischen Cabriolet und nicht beweglichem Dachmodul die Karosserie entlang des oberen Teils des Rahmens der vorderen Windschutzscheibe berührt, und/oder die Karosserie beidseitig vom Bereich der äußeren Kante des Laderaums entlang des Bereichs der oberen Kante der hinteren Kotflügel bis zum Bereich des Türanschlags, bewirkt eine harmonische Gesamterscheinung des Fahrzeugs. Die Berührungskante kann die Karosserie hierbei zumindest abschnittsweise berühren. Zur Abdichtung hierdurch vorhandener oder entstehender Spalten und für den Toleranzausgleich zwischen den Bauteilen sorgt die Übernahme der bestehenden Dichtungssituation mit vorzugsweise kompletter oder teilweiser Übernahme des bestehenden Wassermanagements und / oder ein flexibles Dichtungsmaterial. Ein nicht bewegliches Dachmodul ist entsprechend der Gegebenheiten der Cabrioletkarosserie, umfassend der geometrischen und/oder technischen und/oder funktionalen Einschränkungen durch bestehende Bauteile und/oder Komponenten dimensioniert und ausgelegt.

Ein Cabriolet umfassend die Merkmale, daß die Passung zwischen Cabriolet und nicht beweglichem Dachmodul und der Karosserie den oberen Teil des Rahmens der vorderen Windschutzscheibe **durchgehend** formschlüssig berührt, und/oder die die Passung zwischen Cabriolet und nicht beweglichem Dachmodul und der Karosserie beidseitig vom Bereich der äußeren Kante des Laderaums entlang des Bereichs der oberen Kante der hinteren Kotflügel bis zum Bereich des Türanschlags **durchgehend** formschlüssig berührt bewirkt ebenfalls eine harmonische Gesamterscheinung des Fahrzeugs. Hierbei kann es sich um eine so genannte Nullfuge handeln. Die notwendige Abdichtung gegen Nässe ist in diesem Fall von aussen unsichtbar dahinter angebracht.

Ein Cabriolet umfassend die Merkmale, daß die Passung zwischen Cabriolet und nicht beweglichem Dachmodul mechanisch und/oder elektrisch, zumindest abschnittweise selbsttätig und/oder nicht selbsttätig arretierbar ist bewirkt eine feste Verbindung zwischen beiden. Die mechanische und/oder elektrische Arretierung umfasst z.B. Bauelemente wie Haken und dazu passende Bolzen und/oder Schrauben und Muttern die mittels einer elektrischen und/oder mechanisch ausgeführten Bewegung miteinander in Eingriff gebracht werden können. Diese Verbindungen können dauerhaft fest und/oder flexibel sein. Vorzugsweise werden die bestehenden Befestigungsmöglichkeiten in der Cabrioletkarosserie zur Herstellung der festen Verbindung zu dem nicht beweglichen Dachmodul verwendet. Die bestehenden Befestigungsmöglichkeiten umfassen vorzugsweise die Verdeckschlösser im Windlauf und/oder die bestehenden Muttern und/oder Bolzen in der Karosserie und/oder sonstige Anbindungsmöglichkeiten auf bestehenden Anbauteilen des Cabriolets.

Ein Cabriolet umfassend die Merkmale, daß das nicht bewegliche Dachmodul ein RHT-Modul welches nicht identisch mit dem entnommenen RHT Modul sein braucht, oder ein Speedster-Modul, oder ein Pick-up-Modul, oder ein Kombi-Modul, oder ein Coupe-Modul, oder ein Laundaulet-Modul sein kann, bewirkt eine große Variabilität in der Erscheinungsform. Diese Module umfassen z.B. die Bauelemente eines faltbaren Dachmoduls, welches mittels einer Kinematik einzelne Dachbereiche öffnet und schließt (RHT), bzw. eine großflächige Abdeckung der Kofferraumöffnung durch ein festes Bauteil, welches mittels einer minimalistischen Stoffkapuze zum Scheibenrahmen dem Fahrzeug eine sehr gedrungene Silhouette gibt (Speedster), bzw. ein Bauelement welches den Kofferraum durch eine Wanne wasserdicht auskleidet und deren vordere Wand die Rückseite zum Fahrgastraum bildet (Pick-up), bzw. ein Bauelement welches ein möglichst großes Volumen umschließt und im Fahrzeugheck einen steilen Abschluss und eine Klappe besitzt (Kombi), bzw. ein Bauelement welches vom Dachrahmen bis zum Fahrzeugheck kontinuierlich abfällt und eine charakteristische Coupéform bildet, bzw. ein Bauelement welches auf viersitzige Cabrios Anwendung findet und durch ein festes Dachelement im vorderen Bereich und einen zu öffnenden Teil über den Fontpassagieren verfügt(Landaulet).

Ein Auswechselbares Dach-Heck-RHT-Modul, oder Dach-Heck-Speedster-Modul, oder Dach-Heck-Pick-up-Modul, oder Dach-Heck-Kombi-Modul, oder Dach-Heck-Coupe-Modul, oder Dach-Heck-Landaulet-Modul umfassend das Merkmal, daß es mit einem beschriebenen Cabriolet verbindbar ist, bewirkt eine große Variabilität in der Auswahl der Erscheinungsform. Diese Module umfassen die Bauelemente wie in zuvor beschrieben und gestaltet sind. Alle haben gemeinsam, dass sie die vom Cabriodach befreite Karosserie wieder zum einem vollständigen eigenständigen Fahrzeug mit klaren Differenzierungsmerkmalen, umfassend den unterschiedlichen Nutzungsmöglichkeiten und/oder eines geänderten Innenraumvolumens und/oder der geänderten Außenhautfläche, ergänzen. Sie dichten auf die beschriebene Weise den Innenraum und den Rohbau von Witterungseinflüssen hermetisch ab. Die Bauelemente können, müssen aber nicht tragende und/oder versteifende Funktion übernehmen. Für die Außenhaut werden als Werkstoffe übliche Materialien wie Metallbleche, Kunststoffe oder Faserverbund oder materialien mit vergleichbaren Eigenschaften verwendet. Die Trägerstruktur besteht vorzugsweise aus verformten Blechprofilen, und/oder gebogenen Strangpressprofilen und/oder Metallgussteilen und/oder Faserverbundwerkstoffen und/oder weiteren sonstigen geeigneten Materialien.

Ein derartiges auswechselbares Dach-Heck-Modul umfassend das Merkmal, daß es elektrische und/oder mechanische Bedienelemente zur Ingangsetzung oder zum Abschalten von Fahrzeugfunktionen aufweist, bewirkt ein erweiterte Bedienbarkeit der Fahrzeugfunktionen. Auf diese Weise können Bedienfunktionen in die Dachkonstruktion verlegt werden. Um deren Betrieb zu gewährleisten, können z.B. von diesen im Dach befindlichen Bedienelementen elektrische Leitungen an die Dachkante verlegt werden und mit Hilfe einer beliebig gestaltbaren Steckerkonstruktion mit Leitungen verbunden werden, welche sich in der Karosserie selbst befinden.

Eine Verschlußvorrichtung zum Verbinden eines Dach-Heck-RHT-Moduls, oder Dach-Heck-Speedster-Moduls, oder Dach-Heck-Pick-up-Moduls, oder Dach-Heck-Kombi-Moduls, oder Dach-Heck-Coupe-Moduls, oder Dach-Heck-Landaulet-Moduls welche dieses Modul mit einem beschriebenen Cabriolet nach einem der zuvor genannten Ansprüche zu verbinden in der Lage ist, bewirkt, daß zwischen Modul und Karosserie keine unbeabsichtigten Realtivbewegungen auftreten können. Eine solche kraftschlüssige Verbindung könnte sowohl an mehreren Punkten des Scheibenrahmens, als auch rohbauseitig im Bereich der hinteren Kotflügel oder an den Längsträgern oder an den Querträgern angreifen. Hierbei kann es sich um eine mechanische und/oder elektrische Arretierung handeln, die ggf. auch nach Auslieferung des Fahrzeugs ausgelöst werden kann, um beispielsweise das Modul auszutauschen. Eine solche Verschlusseinrichtung könnte Bauteile wie Haken und dazu passende Bolzen umfassen. Diese könnten mittels einer elektrischen und/oder mechanisch ausgeführten Bewegung ineinander greifen und so oder auf andere Weise eine kraft- und/oder formschlüssige Verbindung bewirken. Anstelle einer wieder lösbaren festen Arretierung des Daches sind auch Schweiß oder Schraub oder Klebeverbindungen denkbar, also stoffschlüssige Verbindungen, beispielsweise für den Fall, daß jemand das Fahrzeug einige Jahre in einer einzigen Gestalt fahren möchte und es lediglich im Falle eines Verkaufs umbauen möchte.

Ein Verfahren zum Austausch eines zueinander beweglichen und / oder ineinander versenkbares Dach-Heckklappenmoduls, welches mit Hilfe eines einzigen Kinematikmoduls relativ zur Cabrioletkarosserie Bewegungen auszuführen in der Lage ist, bei welchem das Dach-Heckklappenmodul durch ein relativ zur Karosserie nicht bewegliches Modul formschlüssig ersetzbar ist, wobei das zueinander bewegliche und / oder ineinander versenkbare Dach-Heckklappenmodul zuerst ganzstückig entnommen wird und dann in einem weiteren Schritt durch ein relativ zur Karosserie nicht bewegliches Modul formschlüssig ersetzt wird, bewirkt eine einfache modulare Austauschbarkeit und damit Änderbarkeit der Gesamtfahrzeugerscheinung.

Die vorbeschriebenen Ausführungen sind nicht nur auf einem Cabriolet umsetzbar, welches wie bis hier beschrieben, insbesondere mit festen Klappen ausgestattet ist, umfassend ein zueinander bewegliches und / oder ineinander versenkbares Dach-Heckklappenmodul (RHT), sondern auch auf andere Cabriolet-Rohkrosserien, die nicht ursprünglich ein RHT-Modul umfassten, aber auch eine Öffnung haben, welche Innenraum und hinteren Laderaum als einstückige Öffnung bereithalten. Auch derartig gestaltete Fahrzeuge können auf die oben beschriebene Weise mit diversen weiteren und untereinander wechselnden Modulen ausgestattet werden.

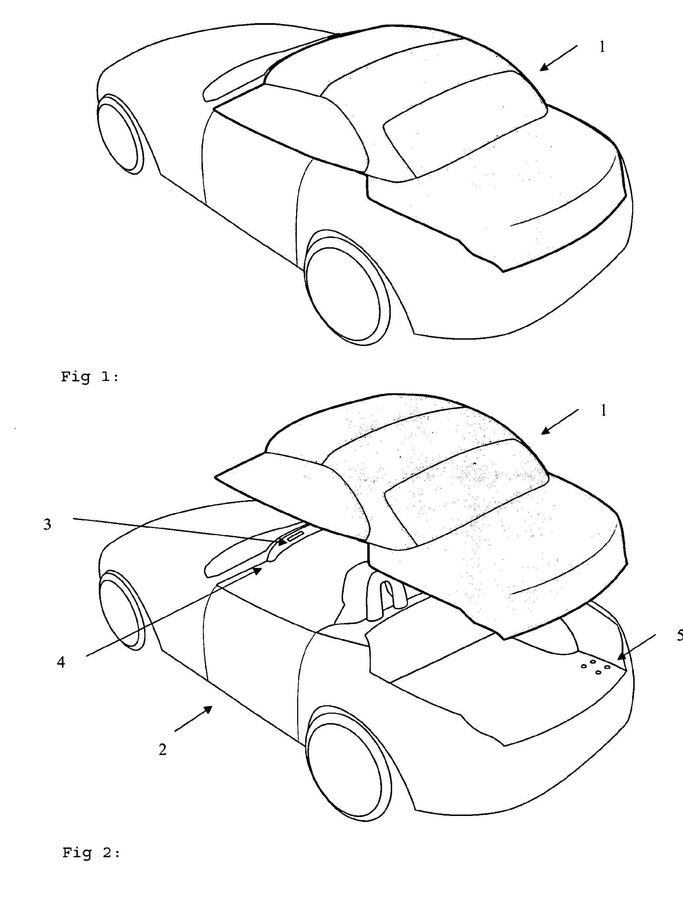

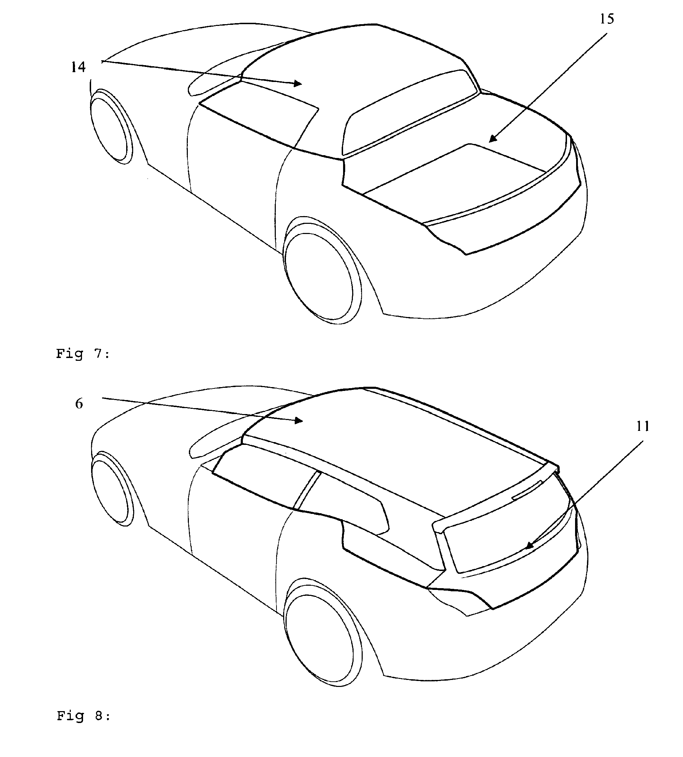

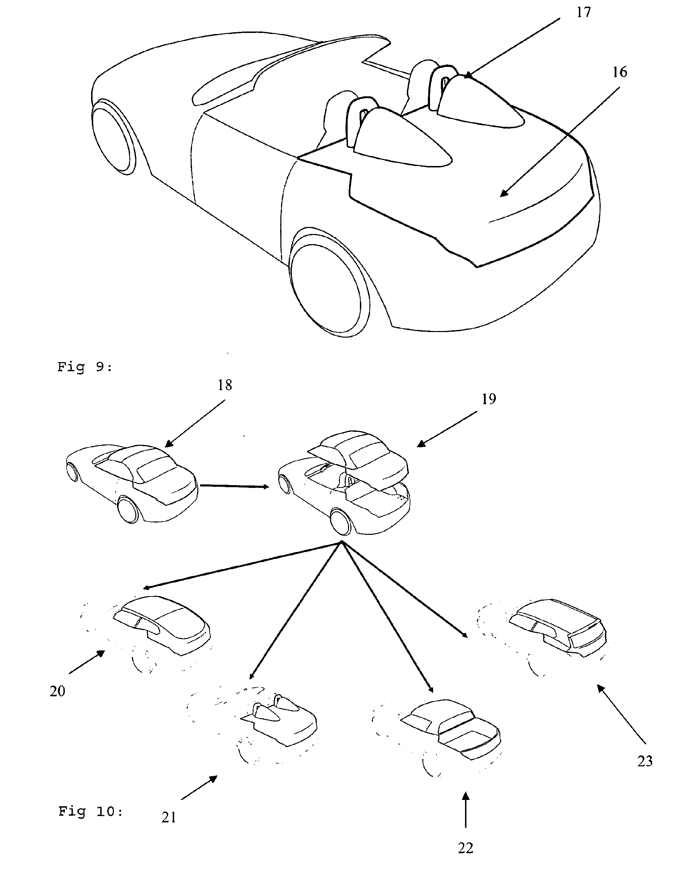

Nachfolgend ist ein Ausführungsbeispiel der Erfindung anhand der Figuren 1 bis 9 beschrieben.

Die Figur 1 zeigt hierbei in ihrem zentralen Bereich ein Fahrzeug, welches ein Cabriolet ist, mit einem Modul umfassend bzw. bestehend aus Dachklappen und Heckklappen 1 und den resultierenden Schnittstellen zu der Karosserie.

Die Figur 2 zeigt die Entnahme des kompletten Dach-Heckmoduls 1 - die Kinematik ist in der schematisch vereinfachten Skizze nicht dargestellt - aus dem Fahrzeug 2. Die Befestigung des Dach-Heckmoduls erfolgte über die Verdeckschlösser 3 im Windlauf 4 und über Befestigungspunkte 5 im Heckend der Karosserie 2.

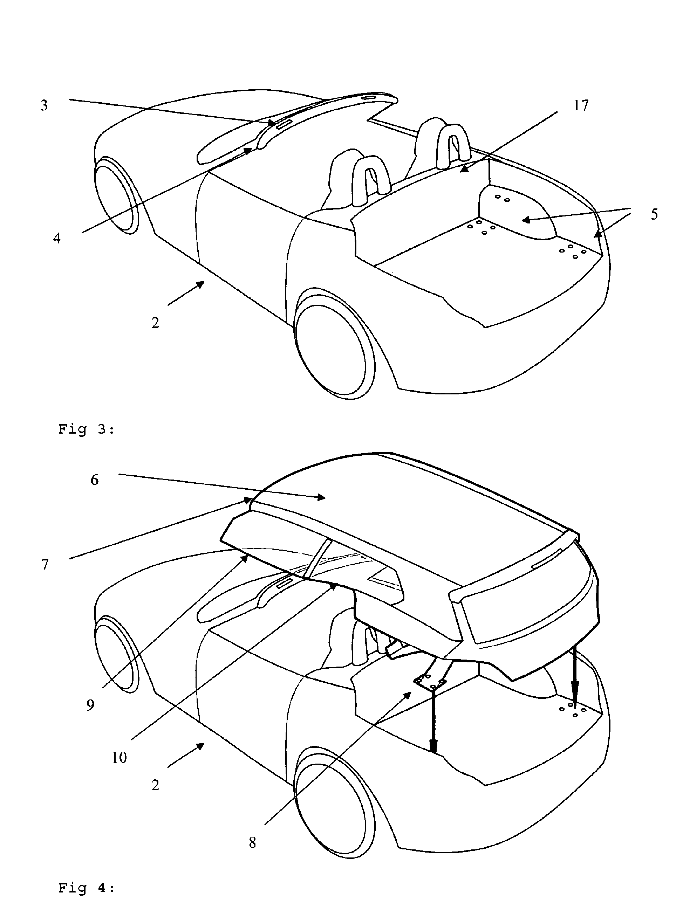

Die Figur 3 zeigt die Karosserie 2 als Basis für das neue Dachmodul, mit den Schnittstellen Verdeckschlösser 3 im Windlauf 4, der geometrischen Vorgaben aus der Hüllkurve der Seitenscheiben (in Grafik nicht dargestellt), dem Brüstungsverlauf der Karosserie 2, dem Ausschnitt des Heckdeckels, sowie der im Rohbau, hinsichtlich der funktionalen Anforderungen Aufnahme der Kinematik eines Moduls umfassend bzw. bestehend aus Dachklappen und Heckklappen 1, verstärkten Befestigungspunkte 5 im Heck der Karosserie 2. Diese Schnittstellen sind die relevanten Vorgaben für das formschlüssige Dachmodul. Die Trennwand 17 teilt den Fahrgastinnenraum von dem Heckbereich.

Die Figur 4 zeigt die Karosserie 2 mit dem exemplarischen Dachmodul 6. Das Dachmodul 6 wird strukturell über stark vereinfachte Verdeckhaken 7 (analog zu Konzept der Verdeckhaken im Cabrioverdeck) an die Befestigungspunkte Verdeckschlösser 3 im Windlauf 4 sowie über eine Bügelstruktur 8 an den Befestigungspunkten 5 im Heckbereich angebunden. Die Seitenscheiben vorne 9 und hinten 10 sind in Figur 4 schematisch als Scheiben mit einem neuen Beschnitt im Bereich des Dachverlaufs dargestellt, die Befestigung der Seitenscheibe vorne 9 erfolgt in der bestehenden Fensterführungsschiene und - aufnahme in der Tür. Die Befestigung der Seitenscheibe hinten - in dem exemplarischen Dach 6 vorhanden - erfolgt an dem Dachmodul 6 und/oder an der hinteren Fensterführungsschiene und -aufnahme.

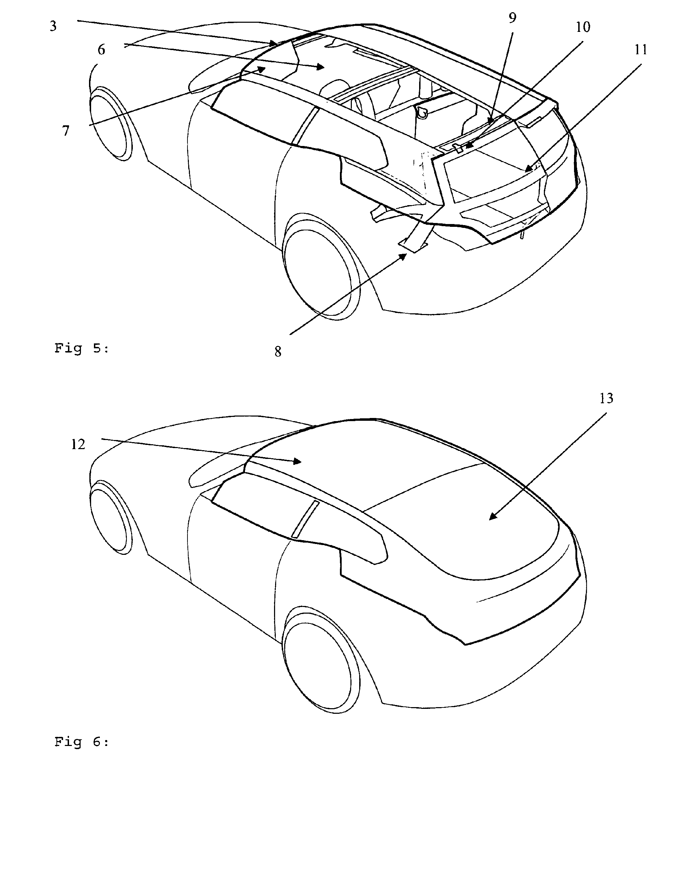

Die Figur 5 zeigt exemplarisch am Dachmodul 6 den formschlüssigen Verbau des Dachmoduls 6 in der Karosserie 2 mit einer Heckklappe 11. Die formschlüssige und festmontierte Verbindung des Dachmoduls erfolgt im wesentlichen über die Verdeckschlösser 3 im Windlauf 4 mit den Verdeckhaken 7 im Dachmodul, unter Übernahme des bestehenden Dichtungskonzeptes aus dem Cabriolet im vorderen Bereich des Dachmoduls, sowie aus der Fixierung der Bügelstruktur 8 in den Befestigungspunkten 5 im Heckbereich der Karosserie 2. Die Bügelstruktur 8 mit dem Querträger 9 wird bei einem Dachmodul mit Heckklappe 11 als Anschlagpunkt für die Scharniere 10 verwendet. Die Bügelstruktur 8 mit dem Querträger 9 wird weiterhin als Verlängerung/Erweiterung des in der Karosserie 2 befindlichen Befestigungsflansches für die Heckklappendichtung verwendet.

Die Figur 6 zeigt ein alternatives formschlüssiges Dachmodul 12 mit einer in flachem Winkel abfallenden langen Heckklappe 13.

Die Figur 7 zeigt ein alternatives formschlüssiges Dachmodul 14 ohne Heckklappe mit einem offenen Laderaum 15.

Die Figur 8 zeigt ein alternatives formschlüssiges Dachmodul 6 mit einer in flachem Winkel abfallenden langen Heckklappe 11, wie bereits in den Figuren 4 und 5 im Detail beschrieben.

Die Figur 9 zeigt ein alternatives formschlüssiges Dachmodul 16, welches lediglich den Bereich im Heckbereich bis zur Trennwand 17 nach vorne abdeckt. Das Dachmodul 16 kann mit oder ohne Heckklappe dargestellt werden.

Die Figur 10 zeigt das Cabriolet als Basisfahrzeug 18, die Entnahme des Moduls umfassend bzw. bestehend aus Dachklappen und Heckklappen 19, sowie die Fahrzeugderivate 20 bis 23 mit den alternativen Dächern als montierbare Ersatzmodule.

## Patentansprüche

1. Cabriolet, umfassend ein zueinander bewegliches und / oder ineinander versenkbares Dach-Heckklappenmodul, welches mit Hilfe eines Kinematikmoduls relativ zur Cabrioletkarosserie Bewegungen auszuführen in der Lage ist, bei welchem das Dach-Heckklappenmodul durch ein relativ zur Karosserie nicht bewegliches Modul formschlüssig ersetzbar ist.

2. Cabriolet nach Anspruch 1, **dadurch gekennzeichnet, daß** das Modul ein Dach-Heckklappenmodul ist.

3. Cabriolet nach einem der zuvor genannten Ansprüche, **dadurch gekennzeichnet, daß** das Dach-Heckklappenmodul des Cabriolets eine multifunktionale Heckklappe umfasst (in Fahrzeuglängsachse in beide Richtungen zu öffnen, Verdeckdeckel und Kofferraumklappe)

4. Cabriolet nach einem der zuvor genannten Ansprüche, wobei die Heckklappe des derivaten Fahrzeugs eine Monofunktionalität aufweist.

5. Cabriolet nach einem der zuvor genannten Ansprüche, wobei das Dach-Heckklappenmodul die vom Cabriolet vorhandenen Anschluss- und/oder Befestigungsmöglichkeiten nutzt.

6. wobei zum elektrischen Betrieb des Dachmoduls und/oder Dach-Heckklappenmoduls die Elektrik / Elektronik selektiv übernommen wird.

7. Cabriolet nach einem der zuvor genannten Ansprüche, **dadurch gekennzeichnet**, wobei zur Sicherstellung der elektrischen/elektronischen Funktionalität des Gesamtfahrzeuges den weiterhin verbauten Cabrioletspezifischen Sensoren und Steuergeräten ein definierter Zustand vorgegeben wird.

8. Cabriolet nach einem der zuvor genannten Ansprüche, wobei die formschlüssige Passung zwischen Cabriolet und nicht beweglichem Dachmodul die Karosserie entlang des oberen Teils des Rahmens der vorderen Windschutzscheibe berührt, und/oder die Karosserie beidseitig vom Bereich der äußeren Kante des Laderaums entlang des Bereichs der oberen Kante der hinteren Kotflügel bis zum Bereich des Türanschlags.

9. Cabriolet nach Anspruch 8, wobei die Passung zwischen Cabriolet und nicht beweglichem Dachmodul und der Karosserie den oberen Teil des Rahmens der vorderen Windschutzscheibe durchgehend formschlüssig berührt, und/oder die die Passung zwischen Cabriolet und nicht beweglichem Dachmodul und der Karosserie beidseitig vom Bereich der äußeren Kante des Laderaums entlang des Bereichs der oberen Kante der hinteren Kotflügel bis zum Bereich des Türanschlags durchgehend formschlüssig berührt.

10. Cabriolet nach einem der zuvor genannten Ansprüche, wobei die Passung zwischen Cabriolet und nicht beweglichem Dachmodul mechanisch und/oder elektrisch, zumindest abschnittweise selbsttätig und/oder nicht selbsttätig arretierbar ist.

11. Cabriolet nach einem der zuvor genannten Ansprüche, das nicht bewegliche Dachmodul ein RHT-Modul, oder ein Speedster-Modul, oder ein Pick-up-Modul, oder ein Kombi-Modul, oder ein Coupe-Modul, oder ein Landaulet-Modul sein kann.

12. Auswechselbares Dach-Heck-RHT-Modul, oder Dach-Heck-Speedster-Modul, oder Dach-Heck-Pick-up-Modul, oder Dach-Heck-Kombi-Modul, oder Dach-Heck-Coupe-Modul, oder Dach-Heck-Landaulet-Modul welches mit einem Cabriolet nach einem der zuvor genannten Ansprüche verbindbar ist.

13. Auswechselbares Dach-Heck-Modul nach Anspruch 12, wobei das Dach-Heck-Modul elektrische und/oder mechanische Bedienelemente zur Ingangsetzung oder zum Abschalten von Fahrzeugfunktionen aufweist

14. Verschlußvorrichtung zum Verbinden eines Dach-Heck-RHT-Moduls, oder Dach-Heck-Speedster-Moduls, oder Dach-Heck-Pick-up-Moduls, oder Dach-Heck-Kombi-Moduls, oder Dach-Heck-Coupe-Moduls, oder Dach-Heck-Landaulet-Moduls welches dieses Modul mit einem Cabriolet nach einem der zuvor genannten Ansprüche zu verbinden geeignet ist.

15. Verfahren zum Austausch eines zueinander beweglichen und / oder ineinander versenkbares Dach-Heckklappenmoduls, welches mit Hilfe eines einzigen Kinematikmoduls relativ zur Cabrioletkarosserie Bewegungen auszuführen in der Lage ist, bei welchem das Dach-Heckklappenmodul durch ein relativ zur Karosserie nicht bewegliches Modul formschlüssig ersetzbar ist, **dadurch gekennzeichnet, daß** das zueinander bewegliche und / oder ineinander versenkbare Dach-Heckklappenmodul zuerst ganzstückig entnommen wird und dann in einem weiteren Schritt durch ein relativ zur Karosserie nicht bewegliches Modul formschlüssig ersetzt wird.
